# EUROPÄISCHE PATENTSCHRIFT

(11) **EP 2 239 166 B1**
(45) Veröffentlichungstag und Bekanntmachung des Hinweises auf die Patenterteilung: **29.05.2013**
(21) Anmeldenummer: 10151101.2
(22) Anmeldetag: 19.01.2010
(51) Int. Cl.: B60R 21/13

(54) **Überrollschutzsystem für Kraftfahrzeuge**
Rollover protection system for motor vehicles
Système de protection contre les tonneaux pour des véhicules automobiles

(43) Veröffentlichungstag der Anmeldung: 13.10.2010
(73) Patentinhaber: ISE Automotive GmbH, 51702 Bergneustadt (DE)
(72) Erfinder: Mika, Frank, 51588, Nümbrecht (DE)
(74) Vertreter: Kalkoff & Partner

(56) Entgegenhaltungen:
- WO-A2-2004/026628
- DE-C1- 19 838 989

## Beschreibung

Die Erfindung betrifft ein Überrollschutzsystem für Kraftfahrzeuge, mit einem zwischen einer Lagerungsposition und einer Überschlagspositionverstellbaren Überrollkörper, wobei der Überrollkörper ein Kunststoffrahmenelement sowie mindestens ein durch das Kunststoffrahmenelement in seiner Position an dem Überrollkörperfestegelegtes und die Festigkeitseigenschaften des Überrollkörpers festlegendes Funktionsbauteil aufweist

Überrollschutzsysteme der eingangs genannten Art sind in vielfältigen Ausgestaltungen aus dem Stand der Technik bekannt. Sie dienen bei Kraftfahrzeugen, wie Cabriolets oder Roadstern, bei denen das Fahrzeugdach zwischen einer den Fahrzeuginnenraum überdeckenden und diesen freigebenden Position verstelltwerden kann, zum Schutz der Insassen im Falle eines Überschlags, wobei die in eine Überschlagspositionaufgestellten Überrollkörper den Insassen einen Überlebensraum bereitstellen, wenn das Fahrzeug bei einem Überschlag auf den Überrollkörpern abrollt.

Neben starr am Fahrzeug angeordneten Überrollkörpern, bspw. Überrollbügeln, welche sich sowohl über die gesamte Fahrzeugbreite erstrecken, aber auch nur jeweils hinter einem Fahrzeugsitz angeordnet sein können, werden vermehrt aktive Überrollschutzsysteme eingesetzt, bei denen die Überrollkörper im Normalzustand in einer zurückgezogenen, von außen nicht sichtbaren Lagerungspositionbefindlich sind und nur im Gefahrenfall, nämlich bei einem drohenden Überschlag in die Überschlagsposition verstellt werden, in der sie in Verbindung mit der Karosserie den Überlebensraum bereitstellen.

Die Überrollkörper der aktiven Überrollschuzsysteme können grundsätzlich beliebige Formen aufweisen, wobei die derzeitige technische Entwicklung das Ziel verfolgt, die Überrollkörper zunehmend zu verkleinern. Die üblicherweise zur Bildung der Überrollkörperzum Einsatz kommenden durchgehenden Metallschalen oder Rohrelemente limitieren jedoch eine Reduzierung der Baugrößen, nachdem die Dimensionierung der im Querschnitt über ihre Gesamtlänge im Wesentlichen konstant ausgebildeten Überrollkörper entsprechend der größten, im Überschlagsfall auf den Überschlagskörper wirkenden Last erfolgen muss. Dies hat zur Folge, dass der Überschlagskörper in den Bereichen, in denen beim Überschlag geringere Belastungen auftreten, überdimensioniert ist.

Aus der WO 2004/026628A2, die den Oberbegriff des Anspruchs 1 bildet, ist ein Überrollkörper bekannt, der aus zwei Komponenten, dem Basiskörper, der kopfseitig mit einem separaten Überrollkopf verbunden ist, zusammengesetzt ist.

Die DE 198 38 989 C1 offenbart einen Profil-Bügelkörper, der ausfahrbar in einer Profilführung innehalb einer Kassette gehaltert ist.

Davon ausgehend liegt der Erfindung die Aufgabe zugrunde, ein Überrollschutzsystem bereitzustellen, dessen Überrollkörper sich besonders flexibel und kostengünstig herstellen lässt und bei geringem Eigengewicht ein hohes Maß an Festigkeit aufweist.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Erfindungsgemäß dient das Kunststoffrahmenelement dazu, das Funktionsbauteil in seiner relativen Position an dem Überrollkörper festzulegen. Unter Funktionsbauteilen werden dabei im Rahmen der Erfindung solche Bauteile verstanden, welche dem Überrollkörper, bspw. einem Überrollbügel gemeinsam mit dem Kunststoffrahmenelement die erforderlichen Produkteigenschaften verleihen, wobei die Funktionsbauteile in erster Linie zur Erreichung der geforderten Festigkeitseigenschaften des Überrollkörper dienen. Zu den Funktionsbauteilen zählen aber auch solche Bauteile, wie Deformationselemente, die zum Abbau kinetischer Energien vorgesehen sind oder Zahnstangen die zur Verriegelung des Überrollkörpers in festgelegten Positionen mit entsprechenden Arretierungsmitteln am Überrollschutzsystem zusammenwirken. Eine Festlegung der Position des Funktionsbauteils am Überrollkörper ist insbesondere dann erforderlich, wenn sich das Funktionsbauteil nicht über die gesamte Länge des Überrollkörpers erstreckt, sondern nur zur Verstärkung besonders belasteter Bereiche dient.

Durch die Verwendung eines sich in der Regel über die gesamte Länge des Überrollkörpers erstreckenden Kunststoffrahmenelements besteht die Möglichkeit, Funktionsbauteile zu verwenden, welche nur in bestimmten Bereichen des Überrollkörper angeordnet sind. So erlaubt die erfindungsgemäße Ausgestaltung zum Beispiel die isolierte, partielle Verstärkung oder Aussteifung im Überschlagsfall besonders belasteter Bereiche des Überrollkörpers durch entsprechend ausgebildete Stützelemente, wie zum Beispiel Metalleinleger oder Kastenprofile, welche sich nicht über die gesamte Länge des Überrollkörpers erstrecken. Die Funktionsbauteile sind durch das Kunststoffrahmenelement in den besonders belasteten

Bereichen festgelegt, so dass zuverlässig gewährleistet wird, dass der entsprechend ausgebildete Überrollkörper den auftretenden Belastungen im Überschlagsfall standhält.

Die erfindungsgemäße Ausgestaltung des Überrollkörpers ermöglicht es somit auf ein durchgehendes Funktionsbauteil zu verzichten, welches in der Regel über die gesamte Länge einen gleichbleibenden, entsprechend der höchsten Belastung ausgelegten Querschnitt aufweist, obgleich diese Belastung üblicherweise nur in einem geringen Bereich auftritt. Am erfindungsgemäßen Überrollkörper lassen sich in komfortabler Weise die unterschiedlichen bzw. erhöhten Belastungen unterliegenden Bereiche durch Anordnung eines geeignetcn Funktionsbauteils in komfortabler Weise besonders leicht und kostengünstig den Belastungen entsprechend ausgestalten. Das Funktionsbauteil ist an dem Kunststoffrahmenelement festgelegt und kann im Vergleich zu den aus dem Stand der Technik bekannten Überrollkörpern im Falle einer bereits durch das Kunststoffrahmenelement bereitgestellten Festigkeitseigenschaft mit geringeren Abmessungen realisiert werden, wodurch neben einer Kostenreduzierung auch eine deutliche Gewichtsreduzierung gegenüber bekannten Überrollkörpern erreicht wird.

Das Kunststoffrahmenelement fungiert somit als Grundgerüst, nämlich zur Anordnung des Funktionsbauteils in dessen seiner Eignung entsprechenden Positionen an dem Überrollkörper. Dabei liegt der Erfindung die Erkenntnis zugrunde, dass die verschiedenen Bereiche des Überrollkörpers unterschiedlichen Belastungen unterliegen, was die Verwendung von sich im Wesentlichen über die gesamte Länge des Überrollkörpers erstreckender Funktionsbauteile überflüssig macht.

Denkbar ist bspw. eine Dimensionierung des Kunststoffrahmenelementes derart, dass dieses zur Aufnahme aller im Belastungsfall auftretenden axial wirkenden Kräfte geeignet ist und dass Bereiche, welche einer erhöhten Biegebelastung unterliegen durch ein Funktionsbauteil entsprechend verstärkt sind.

Grundsätzlich lässt sich der Überrollkörper des erfindungsgemäßen Überrollschutzsystems bereits durch die Verbindung eines Funktionsbauteils mit dem Kunststoffrahmenelement bilden. Erfindungsgemäß sind durch das Kunststoffrahmenelement mindestens zwei Funktionsbauteile relativ zueinander an dem Überrollkörper in ihrer Position festgelegt. Das Kunststoffrahmenelement ist dabei derart ausgelegt, dass eine relativ freie Orientierung der Funktionsbauteile an dem Kunststoffrahmenelement möglich ist, so dass eine entsprechend den bestehenden Belastungen vorteilhafte Ausrichtung erreicht werden kann. Dies ermöglicht eine Optimierung der Funktionsbauteile an die auftretenden Belastungen und somit eine weitergehende Gewichtsreduzierung des Überrollkörpers. Demgemäß kann das Kunststoffrahmenelement auch ein durchgehendes, sich im Wesentlichen über die Länge des Überrollkörpers erstreckendes Funktionsbauteil aufweisen, wobei stärker beanspruchte Bereiche durch ergänzende Funktionsbauteile ausgesteift sind.

Die erfindungsgemäße Ausgestaltung ermöglicht es ferner, das Kunststoffrahmenelement im Wesentlichen allein unter Berücksichtigung dessen Eignung zur Positionsfestlegung der Funktionsbauteile zueinander auszulegen und weitergehende Eigenschaften, insbesondere Festigkeitseigenschaften, unberücksichtigt zu lassen, nachdem diese im Wesentlichen durch die Funktionsbauteile erzeugt werden können. Die Verwendung des Kunststoffrahmenelementes ermöglicht dabei auch eine Anordnung der Funktionsbauteile zueinander, in der diese nicht miteinander in Kontakt stehen, was bei einem Verzicht auf das Kunststoffrahmenelement nicht möglich wäre. Ferner besteht die Möglichkeit der Kombination von Funktionsbauteilen unterschiedlicher Materialien, welche anderenfalls nicht miteinander kombinierbar sind, bspw. weil diese nicht miteinander verschweißbar sind. Das Funktionsbauteil ist an dem Kunststoffrahmenelement festgelegt und kann im Vergleich zu den aus dem Stand der Technik bekannten Überrollkörpern, im Falle einer durch das Kunststoffrahmenelement bereitgestellten Festigkeitseigenschaft mit geringeren Abmessungen realisiert werden, wodurch neben einer Kostenreduzierung ebenfalls eine deutliche Gewichtsreduzierung gegenüber den bekannten Überrollkörpern erreicht wird.

Die Anordnung der Funktionsbauteile an dem Kunststoffrahmenelement kann grundsätzlich in beliebiger Weise ausgestaltet sein, sofern eine Positionssicherung der Funktionsbauteile gewährleistet ist, welche auch im Belastungsfall, nämlich im Falle eines Überschlags, bestehen bleibt.

Erfindungsgemäß ist das Kunststoffrahmenelement jedoch zur kraft- und/oder formschlüssigen Aufnahme der Funktionsbauteile ausgebildet, und weist insbesondere Aufnahmeöffnungen zur Anordnung korrespondierend ausgebildeter Funktionsbauteile auf. Gemäß der Ausgestaltung der Erfindung werden die

Funktionsbauteile an dem zuvor fertiggestellten Kunststoffrahmenelement befestigt. Hierzu weist das Kunststoffrahmenelement Aufnahmen, bspw. Längskanäle, Taschen oder Vertiefungen auf, in welche die Funktionsbauteile einschiebbar sind. Diese Erfindung zeichnet sich dabei dadurch aus, dass die Funktionsbauteile zuvor nicht in ihrer relativen Position zueinander im Rahmen eines Vorverbundes vormontiert werden müssen. Die einzelnen Funktionsbauteile lassen sich in komfortabler Weise nacheinander an dem Kunststoffrahmenelement fixieren, ohne dass diese zuvor zueinander ausgerichtet werden müssen, da die Ausrichtung zueinander durch das Kunststoffrahmenelement vorgegeben wird. Die Verbindung zwischen den Funktionsbauteilen und dem Kunststoffrahmenelement kann dabei grundsätzlich allein auf Kraft- oder Formschluss basieren. Besonders vorteilhafterweise wird jedoch eine kombinierte kraft-/formschlüssige Verbindung verwendet, welche in hohem Maße eine Positionssicherheit der Funktionsbauteile auch im Belastungsfall gewährleistet.

Neben der Vorfertigung des Kunststoffrahmenelementes und die anschließende Anordnung der Funktionsbauteile an dem Kunststoffrahmenelement besteht gemäß einer alternativen Weiterbildung der Erfindung die Möglichkeit, dass das Kunststoffrahmenelement um die Funktionsbauteile gespritzt ist. Diese Ausgestaltung der Erfindung setzt zwar die Herstellung eines Vorverbundes der einzelnen Funktionsbauteile zueinander voraus, gewährleistet jedoch in besonderem Maße eine hohe Positionssicherheit der Funktionsbauteile zueinander, nachdem diese, zumindest teilweise, in das durch Umspritzen der Funktionsbauteile gebildete Kunststoffrahmenelement eingebettet sind. Im Falle der Herstellung eines einfachen Vorverbundes lässt sich gemäß dieser Ausgestaltung der Erfindung der Überrollkörper besonders einfach und kostengünstig herstellen.

Die Ausgestaltung des Kunststolfrahmenelementes ist, wie bereits an obiger Stelle ausgeführt, grundsätzlich frei wählbar. Die grundsätzliche Funktion erfüllt das Kunststoffrahmenelement bereits dann, wenn durch dieses das oder die Funktionsbauteile in ihrer relativen Position zueinander bzw. am Überrollkörper festgelegt sind, so dass insofern bereits eine relativ einfache Ausgestaltung des Kunststoffrahmenelements ausreichend ist.

Nach einer vorteilhaften Weiterbildung der Erfindung ist jedoch vorgesehen, dass das Kunststoffrahmenelement einstückig mit diesem ausgebildete Versteifungselemente und/oder Funktionselemente aufweist. Die Versteifungselemente führen zu einer erhöhten Festigkeit des Kunststoffrahmenelements, welche die Dimensionierung der Funktionsbauteile positiv beeinflusst und zu einer ergänzenden Gewichts- und Kostenreduzierung führt. Erhöhte Festigkeitseigenschaften des Kunststoffrahmenelements erlauben bspw. die Verwendung alternativer Materialien oder eine Materialeinsparung für die Funktionsbauteile. Darüber hinaus dienen die Versteifungselemente zur ergänzenden Abstützung der Funktionsbauteile und verbessern die Gesamtsteifigkeit bzw. -festigkeit des Überrollkörpers.

Die Möglichkeit Funktionselemente, bei denen es sich bspw. um Laschen oder Ösen zur Anordnung von Anbauteilen, oder Anschlägen zur Festlegung einer Endposition handeln kann, einstückig mit dem Kunststoffrahmenelement auszubilden, ermöglicht es in ergänzender Weise, den Überrollkörper besonders kostengünstig herzustellen, da auf die separate Anordnung entsprechender Funktionselemente verzichtet werden kann. Die grundsätzlich recht freie Wahl der Formgebung des Kunststoffrahmenelements ermöglicht dabei grundsätzlich die Ausgestaltung einer Vielzahl von Funktionselementen einstückig mit dem Kunststoffrahmenelement, insbesondere dann, wenn diese keinen hohen mechanischen Belastungen unterliegen.

Nach einer weiteren Ausgestaltung der Erfindung ist das Kunststoffrahmenelement durch einen längskanalisierten Kunststoffhohlkörper gebildet. Diese Ausgestaltung der Erfindung ermöglicht die Verwendung eines kontinuierlich hergestellten extrudierten Kunststoffkörpers, welcher lediglich auf die entsprechenden Längen zugeschnitten werden muss. Die vorgesehenen Längskanäle dienen dabei zur Aufnahme der Funktionsbauteile und sind in entsprechende Öffnungen der Längskanäle einschiebbar. Diese Ausgestaltung ermöglicht somit in ergänzender Weise eine kostengünstige Herstellung des Überrollkörpers, was zu einer weiteren Kostenreduzierung bei der Herstellung des Überrollschutzsystems führt. Der längskanalisierte Kunststoffhohlkörper weist dabei vorzugsweise einen in Längsachsenrichtung verlaufenden konstanten Querschnitt auf.

Die Wahl des Kunststoffs zur Herstellung des Kunststoffrahmenelements ist grundsätzlich, unter Berücksichtigung der zu erreichenden Eigenschaften, frei wählbar. Da der Überrollkörper in der Lagerungsposition in einem vor äußeren Einflüssen geschützten Bereich angeordnet ist, ist ein breites Spektrum an Kunststoffmaterialien einsetzbar. Nach einer weiteren Ausgestaltung der Erfindung ist das Kunststoffrahmenelement jedoch aus faserverstärktem, insbesondere glasfaserverstärktem Kunststoff gebildet. Die Verwendung derartiger Kunststoffe steigert die Festigkeitseigenschaften des Kunststoffrahmenelements in ergänzender Weise, was sich positiv auf die Dimensionierung der Funktionsbauteile auswirkt.

Neben der im Wesentlichen freien Materialwahl für das Kunststoffrahmenelement können auch die Funktionsbauteile grundsätzlich aus beliebigen Materialien gebildet und beliebig ausgebildet sein, sofern diese an dem Kunststoffrahmenelement positionierbar sind. Nach einer vorteilhaften Ausgestaltung der Erfindung ist mindestens ein Funktionsbauteil jedoch durch eine metallische Stützplatte, einen Schalenkörper und/oder ein metallisches Stützrohr und/oder ein Kastenprofil gebildet. Diese Ausgestaltung der Funktionsbauteile zeichnet sich dabei dadurch aus, dass sie besonders einfach herstellbar sind und eine hohe Festigkeit aufweisen. Darüber hinaus lassen sich die derart ausgebildeten Funktionsbauteile in besonders einfacher Weise auch in ein entsprechend ausgestaltetes, vorgeformtes Kunststoffrahmenelement einbringen. Die Funktionsbauteile werden dabei in entsprechenden Aufnahmen an dem Kunststoffrahmenelement aufgenommen. Besonders vorteilhafterweise wird als Metall zur Herstellung der Funktionsbauteile dabei eine Stahl- und/oderAluminiumlegierung verwendet.

Nach einer Weiterbildung der Erfindung ist mindestens ein Funktionsbauteil durch einen Kunststoffeinleger gebildet. Diese können bspw. als an das Kunststoffrahmenelement angepasste Bauteile ausgebildet sein, die sich vorzugsweise formschlüssig mit dem Kunststoffrahmenelement verbinden lassen. Die Verwendung von Kunststoffeinlegern ermöglicht es in besonders einfacher Weise, bestimmte Bereiche des Kunststoffrahmenelements zu verstärken, um die gewünschten Fertigkeitseigenschaften zu erreichen. Insbesondere im Falle einer besonders bevorzugten Möglichkeit, die Kunststoffeinleger am Kunststoffrahmenelement einclipsen zu können, lassen sich kostengünstig geeignete Überrollkörper herstellen.

Nach einer weiteren Ausgestaltung der Erfindung ist mindestens ein Funktionsbauteil durch einen Schaumkörper gebildet. Der Schaumkörper, der in der Regel durch partielles Ausschäumen des Kunststoffrahmenelements erzeugt wird, erhört die Festigkeit des Überrollkörpers. Die Verwendung eines grundsätzlich frei wählbaren Schaummaterials zeichnet sich dabei insbesondere dadurch aus, dass das Schaummaterial die zu verstärkenden Bereiche im Wesentlichen vollständig ausfüllt, so dass in besonders zuverlässiger Weise gewährleistet wird, dass die geforderten Festigkeitseigenschaften erreicht werden.

Ausführungsbeispiele der Erfindung werden nachstehend mit Bezug auf die Zeichnungen erläutert. In den Zeichnungen zeigen:
- Fig. 1: eine perspektivische Ansicht eines gattungsgemäßen Überrollschutzsystems;
- Fig. 2: eine perspektivische Ansicht eines ersten Ausführungsbeispiels eines Überrollkör- pers mit Kunststoffrahmenelement;
- Fig. 2a: eine perspektivische Ansicht der Funktionsbauteile des Überrollkörpers von Fig. 2;
- Fig. 2b: eine Untersicht des Überrollkörpers von Fig. 2a;
- Fig. 3: eine perspektivische Ansicht eines Abschnitts der Funktionsbauteile einer zweiten Ausführungsform eines Überrollkörpers;
- Fig. 3a: eine perspektivische Ansicht des Überrollkörpers von Fig. 3;
- Fig. 3b: eine Untersicht des Überrollkörpers von Fig. 3a;
- Fig. 4: eine Ansicht eines Abschnitts der Funktionsbauteile einer weiteren Ausführungs- form eines Überrollkörpers;
- Fig. 4a: eine perspektivische Ansicht des mit den Funktionsbauteilen von Fig. 4 gebildeten Überrollkörpers;
- Fig. 4b: eine Untersicht des Überrollkörpers von Fig. 4a;
- Fig. 5: eine perspektivische Ansicht eines Abschnitts der Funktionsbauteile eines weiteren Überrollkörpers;
- Fig. 5a: eine perspektivische Ansicht des mit den Funktionsbauteilen von Fig. 5a gebildeten Überrollkörpers;
- Fig. 5b: eine Untersicht des Überrollkörpers von Fig. 5a;
- Fig. 6: eine perspektivische Ansicht einer ersten Ausführungsform eines Kunststoffeinle- gers und
- Fig. 7: eine perspektivische Ansicht einer zweiten Ausführungsform eines Kunststoffeinle- gers.

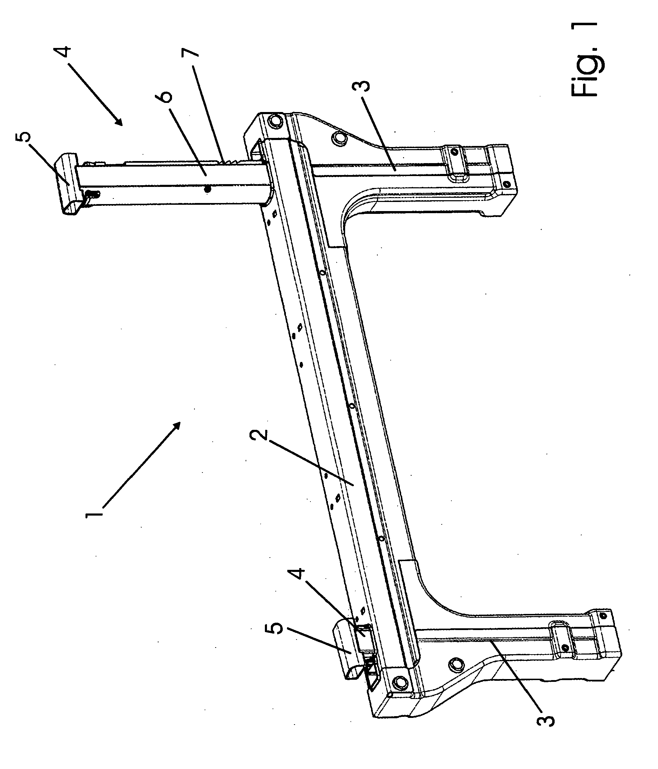

In Fig. 1 ist ein aus dem Stand der Technik bekanntes Überrollschutzsystem 1 dargestellt. Dieses weist im Abstand voneinander angeordnete Stützen 3 auf, die über einen Querträger 2 miteinander verbunden sind. Das Überrollschutzsystem 1 ist im Einbauzustand an einem hier nicht dargestellten Kraftfahrzeug fest mit der Fahrzeugkarosserie verbunden, wobei die Stützen 3 und/oder der Querträger 2 mit der Fahrzeugkarosserie verschraubt sind.

Innerhalb der Stützen 3 sind Überrollkörper 4 in Längsachsenrichtung der Stützen 3 verschiebbar gelagert. In dem in Fig. 1 dargestellten Überrollschutzsystem 1 ist der Überrollkörper 4 einerseits in einer zurückgezogenen Lagerungsposition und andererseits in einer ausgefahrenen Überschlagsposition dargestellt. Der ohne Kunststoffrahmenelement 8 ausgebildete Überrollkörper 4 weist einen Profilkörper 6 auf, an dessen freien Ende sich ein Deformationselement 5 anschließt.

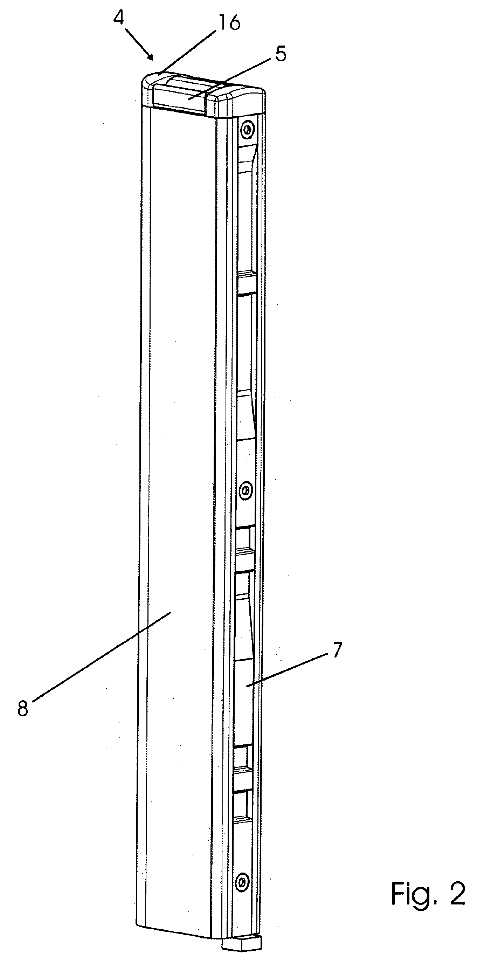

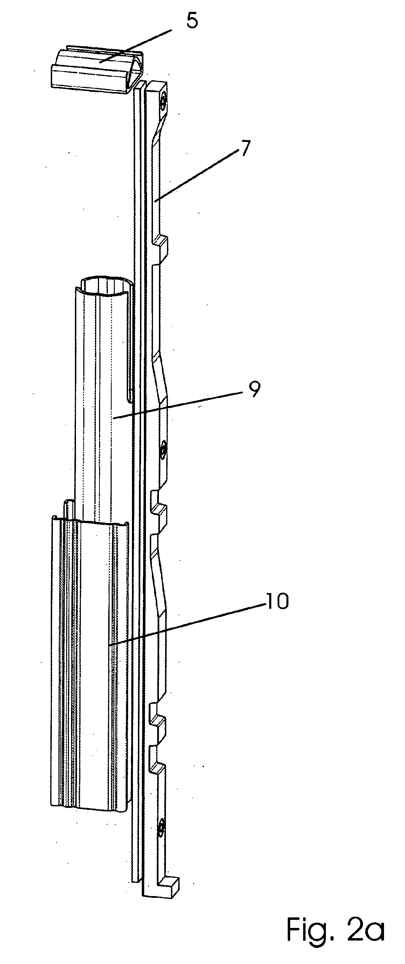

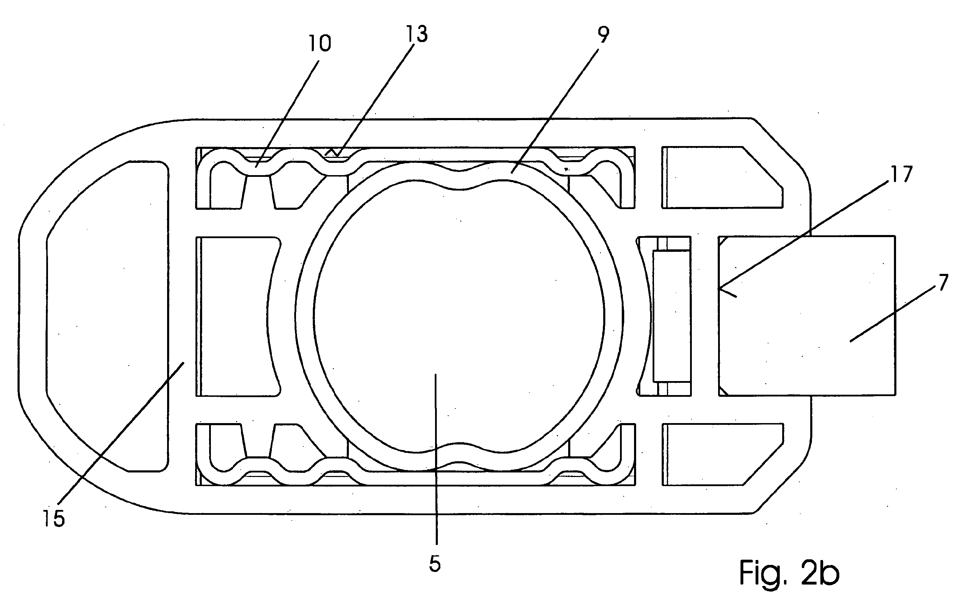

In den nachfolgend erläuterten Fig. 2 - 5b sind verschiedene Ausführungsbeispiele des Überrollkörpers 4 mit einem Kunststoffrahmenelement 8 dargestellt. In dem in den Fig. 2 - 2b dargestellten Ausführungsbeispiel ist der Überrollkörper 4 durch ein Kunststoffrahmenelement 8 gebildet, welches als Hohlkörper ausgeführt ist. Die sich in Längsachsenrichtung des Kunststoffrahmenelements 8 erstreckenden Hohlräume bilden dabei Aufnahmen 13, in der ein Stützrohr 9 sowie Stützplatten 10 kraft- und formschlüssig angeordnet sind. Die Stützplatten 10 sowie das Stützrohr 9 sind dabei in das Kunststoffrahmenelement 8 eingeschoben. An dem Kunststoffrahmenelement 8 sind ferner Halterungen 16 zur formschlüssigen Aufnahme eines Deformationselements 5 ausgebildet. Eine sich an der Außenfläche in Längsachsenrichtung erstreckende Aufnahme 17 dient ferner zur Anordnung einer Zahnstange 7, mittels derer der Überrollkörper 4 in der Überschlagsposition arretierbar ist.

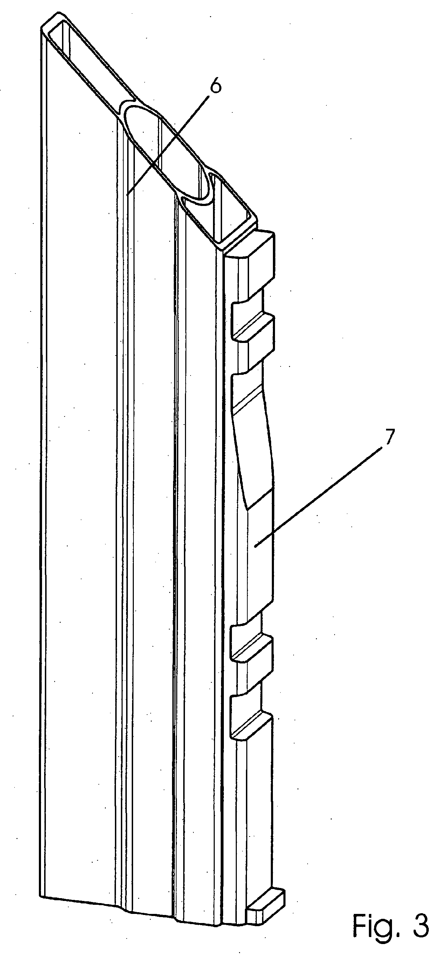

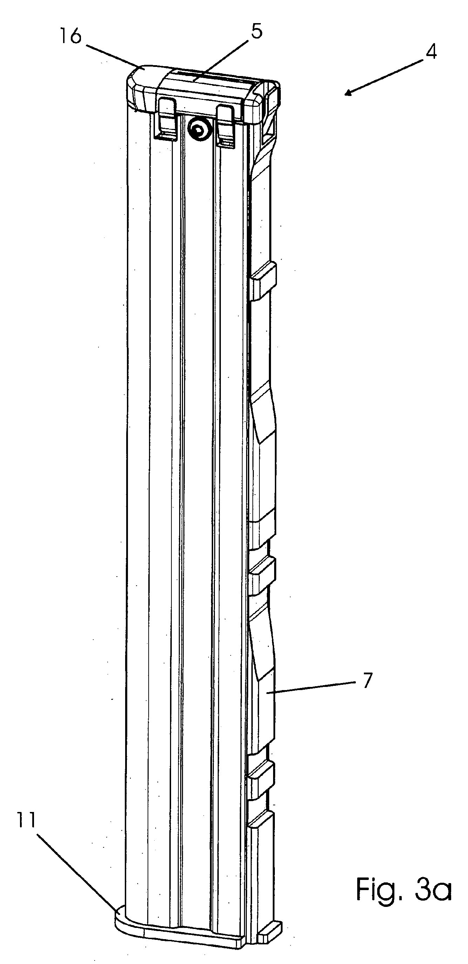

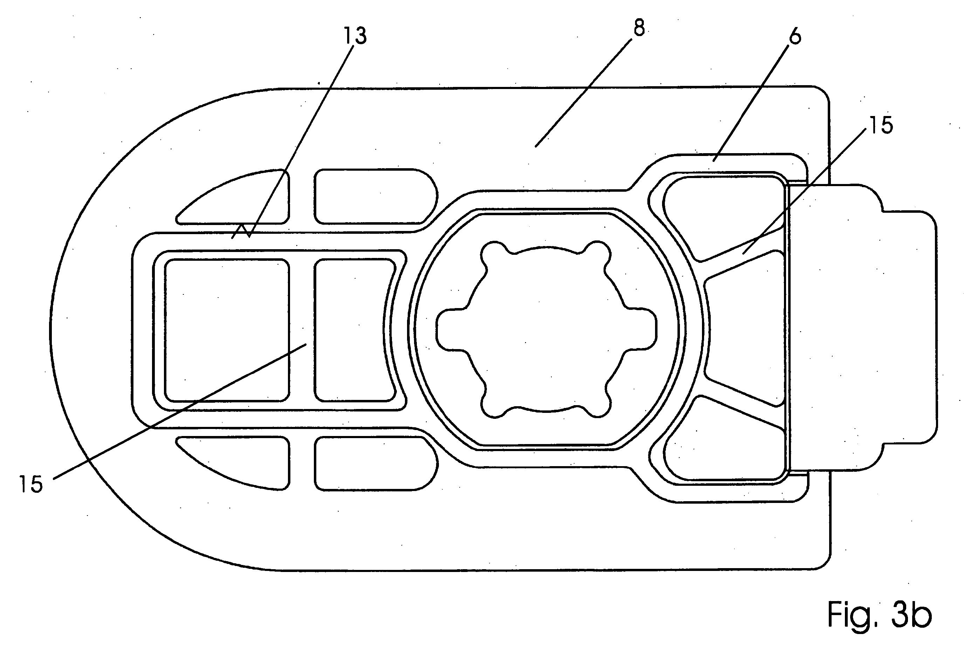

In der weiteren in den Fig. 3 - 3b dargestellten Ausführungsform bildet ein kastenartiger Profilkörper 6 das dem Überrollkörper 4 die notwendige Stabilität verleihende Funktionsbauteil. Der Profilkörper 6 ist dabei in einer in Längsachsenrichtung des Kunststoffrahmenelements 8 verlaufenden Aufnahme 13 angeordnet, wobei der Profilkörper 6 in das Kunststoffrahmenelement 8 eingeschoben ist. Dieses weist ferner die Halterungen 16 zur formschlüssigen Aufnahme des Deformationselements 5 auf. An dem dem Deformationselement 5 gegenüberliegenden Ende weist das Kunststoffrahmenelement 8 ferner einen angeformten Anschlag 11 auf, welcher die Überschlagsposition des Überrollkörpers 4 gegenüber dem Querträger 2 festlegt. Eine seitlich an dem Kunststoffrahmenelement 8 angeordnete Zahnstange 7 dient zur Arretierung des Überrollkörpers 4 in der Überschlagsposition.

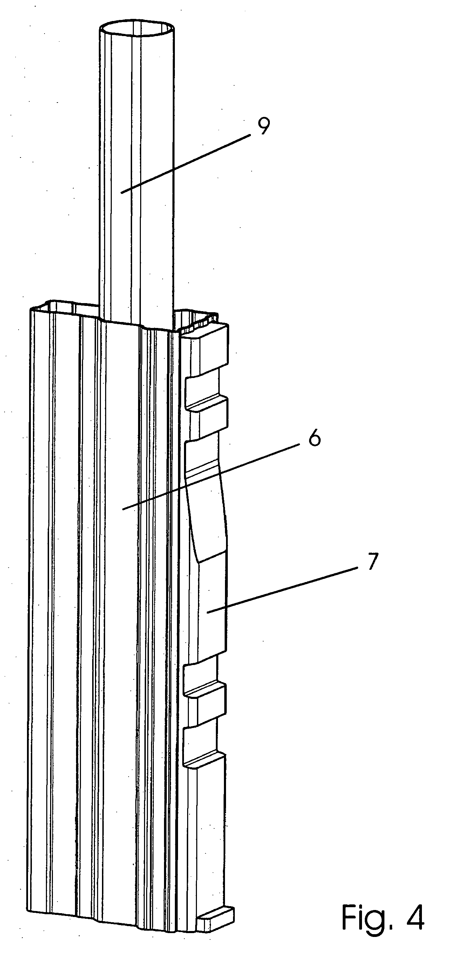

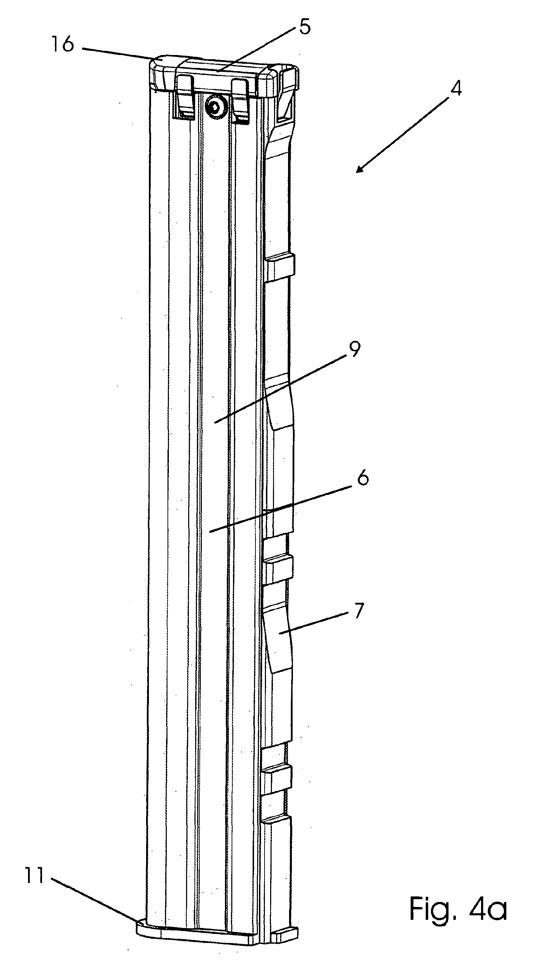

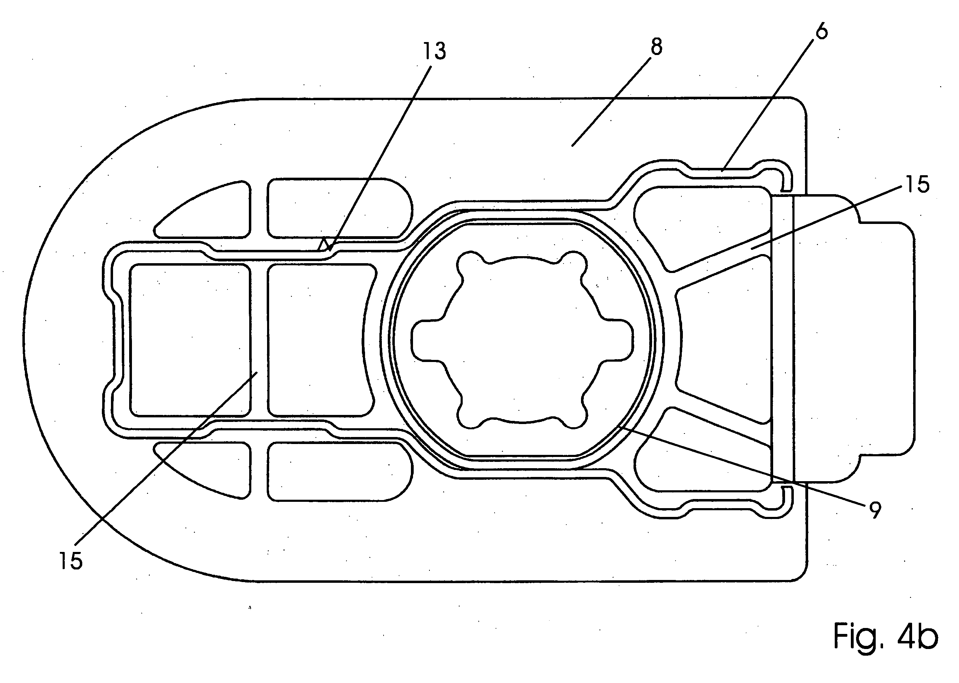

In dem in den Fig. 4 - 4b dargestellten Ausführungsbeispiel des Überrollkörpers 4 wird das Funktionsbauteil durch ein hochfestes Stahlkastenprofil 6 gebildet, in dessen Inneren ein Stützrohr 9 angeordnet ist. Das Stahlkastenprofil 6 sowie das Stützrohr 9 sind - wie in den zuvor dargestellten Ausführungsbeispielen - in in Längsachsenrichtung des Kunststoffrahmenelements 8 verlaufenden Aufnahmen 13 angeordnet. Wie auch das in den Fig. 3 - 3b dargestellte Ausführungsbeispiel, so weist der Überrollkörper 4 einenends Halterungen 16 zur Aufnahme des Deformationselements 5 sowie anderenends einen an dem Kunststoffrahmenelement 8 angeformten Anschlag 11 auf. Eine seitlich an dem Kunststoffrahmenelement 8 angeordnete Zahnstange 7 dient zur Arretierung des Überrollkörpers 4 in der Überschlagsposition.

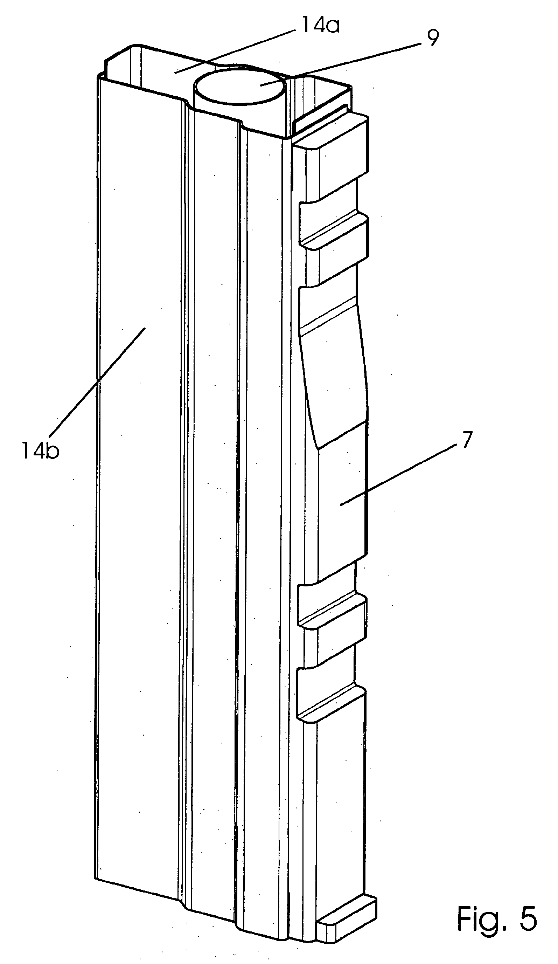

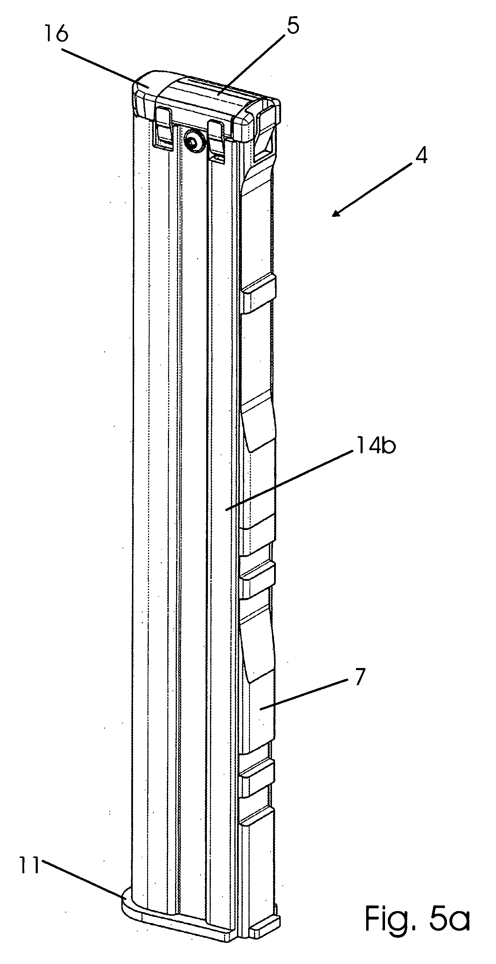

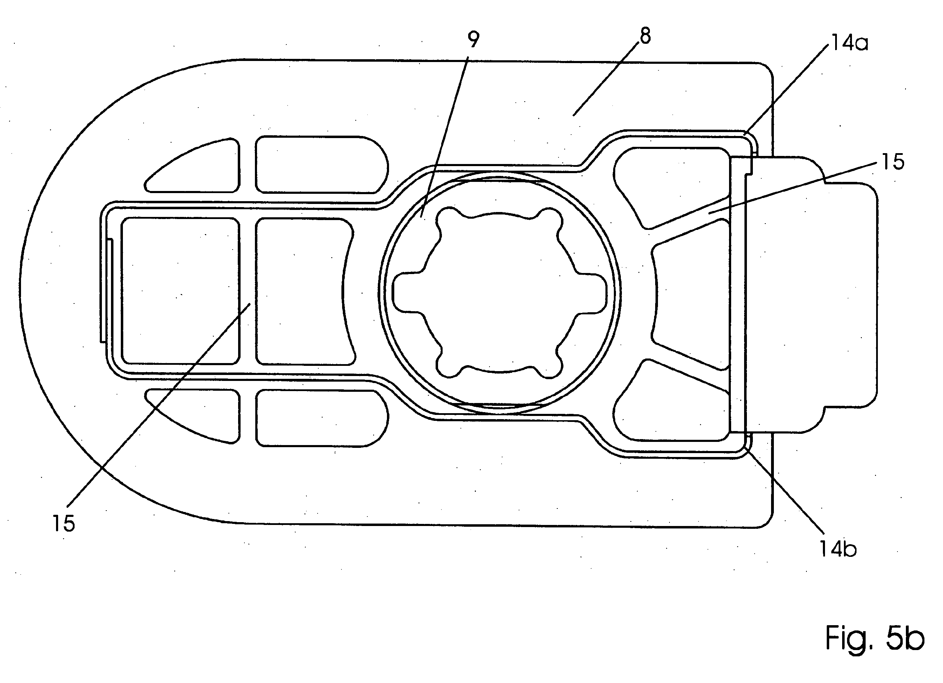

Der in den Fig. 5 - 5b dargestellte Überrollkörper 4 weist im Gegensatz zu den zuvor dargestellten Überrollkörpern 4 ein aus zwei hochfesten Stahlschalen 14a, 14b gebildetes Funktionsbauteil auf, wobei zwischen den Stahlschalen 14a, 14b ein Stützrohr 9 angeordnet ist. Wie auch in den zuvor dargestellten Ausführungsbeispielen sind die Stahlschalen 14a, 14b und das Stützrohr 9 innerhalb von in Längsachsenrichtung des Kunststoffrahmenelements 8 angeordneten Aufnahmen angeordnet und einerseits des Überrollkörpers 4 weist das Kunststoffrahmenelement 8 Halterungen 16 zur Aufnahme des Deformationselements 5 und anderenends einen angeformten Anschlag 11 auf. Eine Zahnstange 7 dient zur Arretierung des Überrollkörpers 4 in der Überschlagsposition.

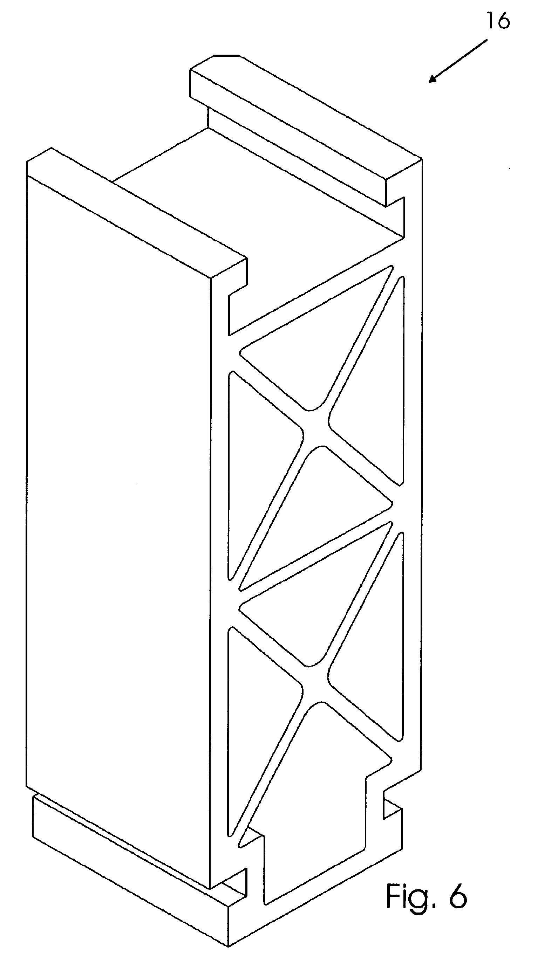

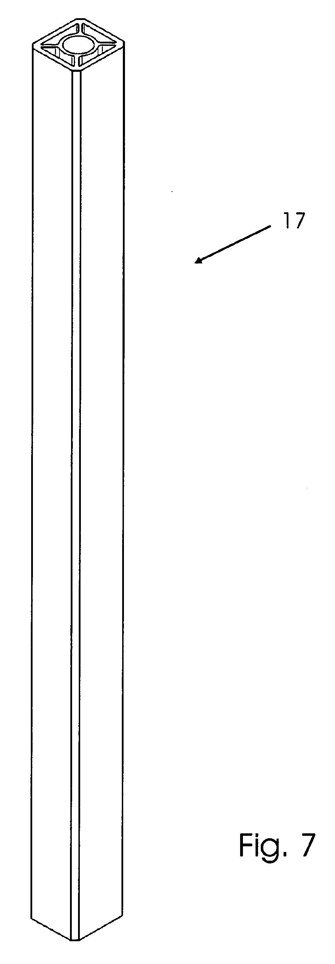

Zur Verstärkung des Kunststoffrahmenelements 8 können auch Kunststoffeinleger 16,17 verwendet werden, welche dem Kunststoffrahmenelement 8 in den Verbindungsbereichen mit dem Kunststoffrahmenelement 8 eine erhöhte Festigkeit verleihen. Die Verwendung eines Kunststoffeinlegers 16, der nach Art eines Bausteins gebildet ist, der an das Kunststoffrahmenelement 8 angepasst ist, ermöglicht eine flexible und einfache Verstärkung des Kunststoffrahmenelements 8 bspw. durch an- oder einclipsen des Kunststoffeinlegers 16 (vgl. Fig. 6 und 7).

## Patentansprüche

1. Überrollschutzsystem für Kraftfahrzeuge, mit einem zwischen einer Lagerungsposition und einer Überschlagsposition verstellbaren Überrollkörper, wobei der Überrollkörper (4) ein Kunststoffrahmenelement (8) sowie mindestens ein durch das Kunststoffrahmenelement (8) in seiner Position an dem Überrollkörper (4) festgelegtes und die Festigkeitseigenschaften des Überrollkörpers (4) festlegendes Funktionsbauteil (5, 9, 10, 14a, 14b) aufweist,
**dadurch gekennzeichnet, dass**
durch das Kunststoffrahmenelement (8) mindestens zwei Funktionsbauteile (5, 9, 10, 14a, 14b) relativ zueinander an dem Überrollkörpers (4) in ihrer Position festgelegt sind und dass das Kunststoffrahmenelement (8) zur kraft- und/oder formschlüssigen Aufnahme der Funktionsbauteile (5, 9, 10, 14a, 14b) ausgebildet ist und Aufnahmen (13) zur Anordnung korrespondierend ausgebildeter Funktionsbauteile (5, 9, 10, 14a, 14b) aufweist.

2. Überrollschutzsystem nach einem der vorhergehenden Ansprüche, **dadurch gekennzeichnet, dass** das Kunststoffrahmenelement (8) um die Funktionsbauteile (5, 9, 10, 14a, 14b) gespritzt ist.

3. Überrollschutzsystem nach einem der vorhergehenden Ansprüche, **dadurch gekennzeichnet, dass** das Kunststoffrahmenelement (8) einstückig mit diesem ausgebildete Versteifungselemente (15) und/oder Funktionselemente (11, 16) aufweist.

4. Überrollschutzsystem nach einem der vorhergehenden Ansprüche, **dadurch gekennzeichnet, dass** das Kunststoffrahmenelement durch einen längskanalisierten Kunststoffhohlkörper (8) gebildet ist.

5. Überrollschutzsystem nach einem der vorhergehenden Ansprüche, **dadurch gekennzeichnet, dass** das Kunststoffrahmenelement (8) aus faserverstärktem, insbesondere glasfaserverstärktem Kunststoff gebildet ist.

6. Überrollschutzsystem nach einem der vorhergehenden Ansprüche, **dadurch gekennzeichnet, dass** mindestens ein Funktionsbauteil (5, 9, 10, 14a, 14b) durch eine metallische Stützplatte (10), einen Schalenkörper (14a, 14b) und/oder ein metallisches Stützrohr (9) und/oder ein Kastenprofil (6) gebildet ist.

7. Überrollschutzsystem nach einem der vorhergehenden Ansprüche, **dadurch gekennzeichnet, dass** die Funktionsbauteile (5, 9, 10, 14a, 14b) aus Stahl- und/oder Aluminiumlegierungen gebildet sind.

8. Überrollschutzsystem nach einem der vorhergehenden Ansprüche, **dadurch gekennzeichnet, dass** mindestens ein Funktionsbauteil (5, 9, 10, 14a, 14b) durch einen Kunststoffeinleger (16, 17) gebildet ist.

9. Überrollschutzsystem nach einem der vorhergehenden Ansprüche, **dadurch gekennzeichnet, dass** mindestens ein Funktionsbauteil (5, 9, 10, 14a, 14b) durch einen Schaumkörper gebildet ist.

## Claims

1. A rollover protection system for motor vehicles having a rollover body movable between a storage position and a rollover position, wherein the rollover body (4) has a plastic frame element (8) and at least one functional component (5, 9, 10, 14a, 14b) fixed in the position thereof at the rollover body (4) by the plastic frame element (8) and determining the stability properties of the rollover body (4),
**characterized in that**,
due to the plastic frame element (8), at least two functional components (5, 9, 10, 14a, 14b) are fixed in the position thereof relative to each other at the rollover body (4), and that the plastic frame element (8) is formed for receiving the functional components (5, 9, 10, 14a, 14b) in a force-closed and form-closed manner, and has receptacles (13) for the arrangement of correspondingly formed functional components (5, 9, 10, 14a, 14b).

2. The rollover protection system according to one of the preceding claims, **characterized in that** the plastic frame element (8) is injection molded around the functional components (5, 9, 10, 14a, 14b).

3. The rollover protection system according to one of the preceding claims, **characterized in that** the plastic frame element (8) has stiffening elements (15) and/or functional elements (11, 16) formed integrally therewith.

4. The rollover protection system according to one of the preceding claims, **characterized in that** the plastic frame element is formed by a longitudinally channeled plastic hollow body (8).

5. The rollover protection system according to one of the preceding claims, **characterized in that** the plastic frame element (8) is formed from fiber-reinforced, in particular fiber glass reinforced plastic material.

6. The rollover protection system according to one of the preceding claims, **characterized in that** at least one functional component (5, 9, 10, 14a, 14b) is formed by a metal support plate (10), a shell body (14a, 14b) and/or a metal support tube (9) and/or a box profile (6).

7. The rollover protection system according to one of the preceding claims, **characterized in that** the functional components (5, 9, 10, 14a, 14b) are formed from steel and/or aluminum alloys.

8. The rollover protection system according to one of the preceding claims, **characterized in that** at least one functional component (5, 9, 10, 14a, 14b) is formed by a plastic insert (16, 17).

9. The rollover protection system according to one of the preceding claims, **characterized in that** at least one functional component (5, 9, 10, 14a, 14b) is formed by a foam body.

## Revendications

1. Système de protection contre les tonneaux pour des véhicules automobiles comprenant un corps de retournement pouvant être déplacé entre une position de stockage et une position de capotage, dans lequel le corps de retournement (4) présente un élément de cadre plastique (8) ainsi qu'au moins un composant fonctionnel (5, 9, 10, 14a, 14b) fixé dans sa position au corps de retournement (4) à travers l'élément de cadre plastique (8) et déterminant les propriétés de solidité du corps de retournement (4),
**caractérisé en ce que**
au moins deux composants fonctionnels (5, 9, 10, 14a, 14b) sont fixés l'un par rapport à l'autre au corps de retournement (4) dans leur position à travers l'élément de cadre plastique (8) et que l'élément de cadre plastique (8) est réalisé pour la réception par adhérence et/ou par conjugaison de formes des composants fonctionnels (5, 9, 10, 14a, 14b) et présente des logements (13) pour l'agencement de composants fonctionnels (5, 9, 10, 14a, 14b) réalisés en correspondance.

2. Système de protection contre les tonneaux selon l'une quelconque des revendications précédentes, **caractérisé en ce que** l'élément de cadre plastique (8) est injecté autour des composants fonctionnels (5, 9, 10, 14a, 14b).

3. Système de protection contre les tonneaux selon l'une quelconque des revendications précédentes, **caractérisé en ce que** l'élément de cadre plastique (8) présente des éléments de renforcement (15) et/ou des éléments fonctionnels (11, 16) réalisés d'une pièce avec celui-ci.

4. Système de protection contre les tonneaux selon l'une quelconque des revendications précédentes, **caractérisé en ce que** l'élément de cadre plastique est formé par un corps creux plastique (8) doté de canaux longitudinaux.

5. Système de protection contre les tonneaux selon l'une quelconque des revendications précédentes, **caractérisé en ce que** l'élément de cadre plastique (8) est formé de plastique renforcé par des fibres, notamment renforcé par des fibres de verre.

6. Système de protection contre les tonneaux selon l'une quelconque des revendications précédentes, **caractérisé en ce qu'**au moins un composant fonctionnel (5, 9, 10, 14a, 14b) est formé par une plaque d'appui métallique (10), un corps de coque (14a, 14b) et/ou un tuyau d'appui métallique (9) et/ou un cadre ferme (6).

7. Système de protection contre les tonneaux selon l'une quelconque des revendications précédentes, **caractérisé en ce que** les composants fonctionnels (5, 9, 10, 14a, 14b) sont formés d'alliages d'acier et/ou d'aluminium.

8. Système de protection contre les tonneaux selon l'une quelconque des revendications précédentes, **caractérisé en ce qu'**au moins un composant fonctionnel (5, 9, 10, 14a, 14b) est formé par un insert plastique (16, 17).

9. Système de protection contre les tonneaux selon l'une quelconque des revendications précédentes, **caractérisé en ce qu'**au moins un composant fonctionnel (5, 9, 10, 14a, 14b) est formé par un corps en mousse.
